# EUROPÄISCHE PATENTSCHRIFT

(11) **EP 1 368 152 B1**
(45) Veröffentlichungstag und Bekanntmachung des Hinweises auf die Patenterteilung: **12.06.2013**
(21) Anmeldenummer: 02717989.4
(22) Anmeldetag: 05.03.2002
(51) Int. Cl.: B23H 9/06, C25F 7/00

(54) **VERFAHREN ZUR STRUKTURIERUNG EINER OBERFLÄCHE**
METHOD FOR STRUCTURING A SURFACE
PROCÉDÉ POUR STRUCTURER UNE SURFACE

(30) Priorität: 07.03.2001 DE 10111019
(43) Veröffentlichungstag der Anmeldung: 10.12.2003
(73) Patentinhaber: ROBERT BOSCH GMBH, 70442 Stuttgart (DE)
(72) Erfinder: GLOCK, Armin, 73660 Urbach (DE); LEUTHNER, Stephan, 70372 Stuttgart (DE); KANTERS, Petra, 70197 Stuttgart (DE); HACKENBERG, Juergen, 74343 Sachsenheim (DE)
(86) Internationale Anmeldenummer: PCT/DE2002/000801
(87) Internationale Veröffentlichungsnummer: WO 2002/070183

(56) Entgegenhaltungen:
- EP-A- 1 068 921
- CH-A- 558 700
- FR-A- 2 166 760
- GB-A- 1 600 667
- GB-A- 2 101 157
- US-A- 3 471 385
- US-A- 5 322 613

## Beschreibung

Die vorliegende Erfindung betrifft eine Vorrichtung bzw. ein Verfahren zur Strukturierung einer Oberfläche eines elektrisch leitfähigen und als Anode geschalteten Gegenstandes durch einen ECM-Prozess gemäß dem Oberbegriff der unabhängigen Ansprüche 1 bzw. 3, wie aus der GB-A-1 600 667 bekannt.

Die US-A-4110190 offenbart ein elektrochemisches Bearbeitungsverfahren, welches sich eines gepulsten Gleichstroms bedient.

Die AU-B2-199660783 offenbart einen elektrochemischen Oberflächenbehandlungsprozess unter Verwendung einer Maske und eines gepulsten Gleichstroms.

Die Druckschrift US 5 322 613 A offenbart eine Vorrichtung zur elektrochemischen Bearbeitung von zahnmedizinischen Produkten, bei der auf ein zu behandelndes Objekt eine Maske aufgelegt wird. Durch Verwenden des Objekts als Anode und eines Handgeräts als Kathode kann eine Struktur auf die Oberfläche des Objekts aufgebracht werden.

Um Oberflächen von metallischen Gegenständen bearbeiten und strukturieren zu können, werden unter anderem auch elektrochemische Verfahren herangezogen. Diese sogenannten Electrochemical Machining-Prozesse (ECM) beziehungsweise Electrochemical Micro-Machining-Prozesse (EMM) beruhen auf dem elektrochemischen Abtrag von metallischem Material der zu strukturierenden Oberfläche. Dazu wird der Gegenstand als Anode geschaltet und in eine Elektrolytlösung getaucht. Zwischen dem als Anode kontaktierten Gegenstand und einer separaten Kathode wird eine ausreichend hohe Spannung angelegt und bei entsprechenden Stromdichten erfolgt der erwünschte Materialabtrag. Um gezielt Strukturen auf der Oberfläche zu erzeugen, ist aus der WO 98/37457 ein Verfahren bekannt, bei dem die Oberfläche durch ein photolithographisches bzw. ein Siebdruckverfahren mit einer Maske versehen wird. Nur dort, wo diese Maske Durchbrechungen aufweist, findet ein Materialabtrag statt. Während einer Serienfertigung müssen demnach alle zu strukturierenden Oberflächen zunächst maskiert werden. Dies ist kosten- und zeitintensiv.

Aufgabe der vorliegenden Erfindung ist es, ein Verfahren zur Strukturierung der Oberfläche von Gegenständen bereitzustellen, das kostengünstig in eine Serienfertigung zu integrieren ist und die simultane Strukturierung eines Gegenstandes von zwei oder mehr Seiten ermöglicht.

### Vorteile der Erfindung

Die erfindungsgemäße Vorrichtung bzw. das der Erfindung zu Grunde liegende Verfahren, wie in Anspruch 1 bzw. Anspruch 4 definiert, ermöglichen eine automatisierte und somit kostengünstige Strukturierung der Oberfläche von Gegenständen. Die Strukturierung erfolgt mittels eines ECM-Prozesses, bei dem eine Maske in die ECM-Anlage integriert ist. Dabei entfällt die Maskierung der zu strukturierenden Oberfläche.

Das Verfahren ist durch eine sehr geringe Unterätzung und durch einen hohen Abtrag in kurzen Zeiträumen gekennzeichnet.

Mit den in den Unteransprüchen aufgeführten Maßnahmen sind vorteilhafte Weiterbildungen möglich. So wird eine bewegliche Maske im Zwischenraum zwischen Kathode und zur strukturierender Oberfläche auf der Kathode angeordnet. Erfindungsgemäß nimmt diese die Form eines zwischen Kathode und zur strukturierender Oberfläche durchführbaren Bandes an. Dies ist besonders bei Fließbandprozessen von Vorteil.

Bei einer vorteilhaften Ausführungsform sind zwei Kathoden vorgesehen, die jeweils eine Maske aufweisen. Dies ermöglicht die simultane Strukturierung von zwei Oberflächen desselben Gegenstandes.

Besonders vorteilhaft ist weiterhin, dass sich Metallbleche auf einfache Weise beispielsweise mit den Kanalstrukturen eines Wärmeübertragers versehen lassen. Dies vereinfacht dessen Herstellung.

### Zeichnung

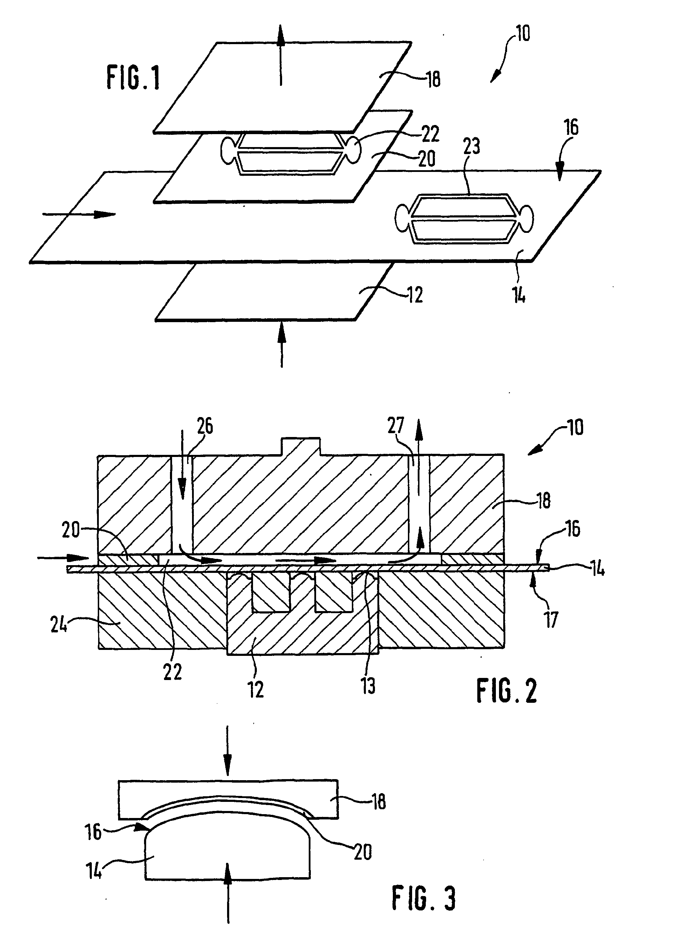

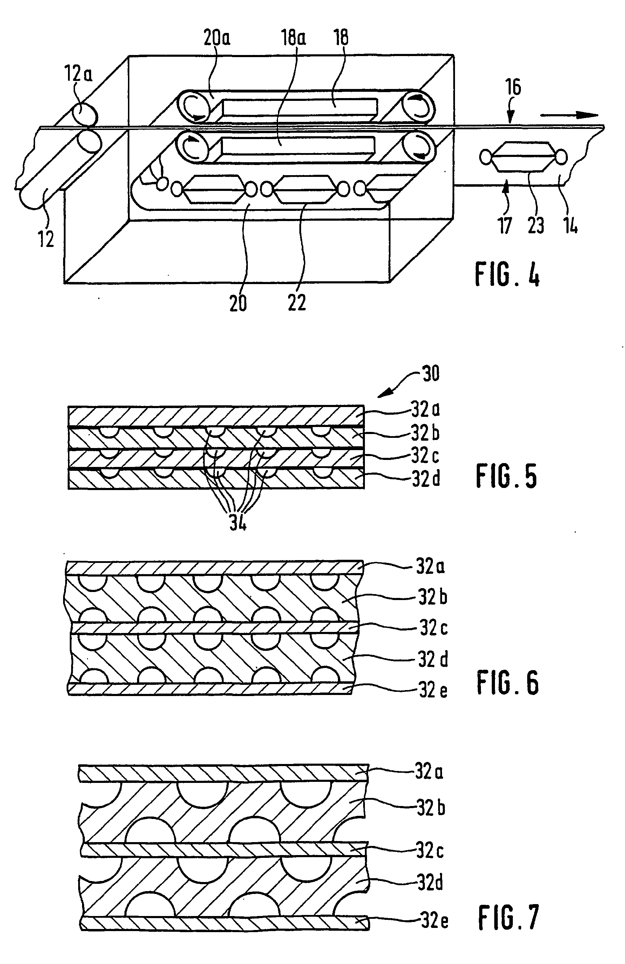

In Figur 1 ist schematisch eine Vorrichtung gemäß einem ersten Beispiel dargestellt. Figur 2 zeigt einen Querschnitt durch eine Vorrichtung gemäß einem zweiten Beispiel, Figur 3 stellt schematisch die Strukturierung gekrümmter oberflächen dar und in Figur 4 ist eine Vorrichtung gemäß einem Ausführungsbeispiel der vorliegender Erfindung dargestellt. Die Figuren 5 bis 7 zeigen Querschnitte durch den Schichtaufbau von Wärmeübertagern, wobei die einzelnen Schichten mittels einer Vorrichtung bzw. gemäß dem erfindungsgemäßen Verfahren hergestellt werden.

### Ausführungsbeispiele

In Figur 1 ist ein erstes Beispiel dargestellt. Die Vorrichtung 10 umfaßt eine Anode 12, die in Kontakt mit einem Gegenstand 14 gebracht wird, der eine zu strukturierende Oberfläche 16 aufweist. Auf diese Weise wird der Gegenstand 14 als Anode kontaktiert. Desweiteren weist die Vorrichtung 10 eine Kathode 18 und eine Maske 20 auf, wobei die Maske 20 zwischen der Kathode 18 und der zu strukturierenden Oberfläche 16 angeordnet ist. Die Maske 20 ist aus einem den elektrischen Strom nichtleitenden Material wie beispielsweise Chlortrifluorethylen (CTFE), PVC, PP, PVDF oder PEEK hergestellt. Die Maske weist Durchbrechungen 22 auf, deren Abmessungen weitgehend denen der auf der Oberfläche 16 zur erzeugenden Struktur 23 entsprechen. Für den Strukturierungsvorgang werden die Anode 12 bzw. die Kathode 18 in Pfeilrichtung in Kontakt mit dem Gegenstand 14 gebracht. Zusätzlich kann Druck auf die Kathode 18 ausgeübt werden, so dass diese zusammen mit der Maske 20 auf die zu strukturierende Oberfläche 16 aufgepreßt wird. Zwischen die Kathode 18 und die zu strukturierende Oberfläche 16 wird weiterhin ein nicht dargestellter Elektrolyt eingebracht. Der Strukturierungsvorgang wird durch Anlegen einer ausreichend hohen Spannung zwischen Kathode 18 und Anode 12 in Gang gesetzt.

In Figur 2 ist eine Schnittdarstellung einer Vorrichtung gemäß einem zweiten Beispiel abgebildet. Der Gegenstand 14 mit der zu strukturierenden Oberfläche 16 wird in Pfeilrichtung über eine Auflage 24 geführt und auf eine der zu strukturierenden Oberfläche 16 entgegengesetzten Seite 17 durch eine Anode 12 kontaktiert. Die Anode 12 weist an den die Oberfläche 17 berührenden Bereichen Rundprofile 13 auf, die die Bewegung des Gegenstandes 14 erleichtern. Auf die Kathode 18 ist die Maske 20 als Oberflächenbeschichtung aufgebracht, die entsprechende Durchbrechungen 22 aufweist. Die Oberflächenbeschichtung kann dabei aus Materialien wie CTFE oder einem Fotoresist ausgeführt sein.

Die Kathode 18 umfaßt weiterhin eine Bohrung 26 für die Zuführung eines Elektrolyten auf sowie eine Bohrung 27 zu dessen Abführung. Die Bohrungen 26, 27 sind beispielsweise so ausgeführt, dass der Elektrolyt über die Bohrung 26 in die Durchbrechung 22 der Maske 20 gelangt, innerhalb der Durchbrechung 22 parallel zu der zu strukturierenden Oberfläche 16 geführt und über die Bohrung 27 abgeführt wird. Besonderes gleichmäßige Strukturen 23 werden erzeugt, wenn die Strömungsrichtung des Elektrolyten zeitweilig umgekehrt oder dessen Strömungsgeschwindigkeit schubweise variiert wird. Die Qualität der Strukturen 23 kann weiter verbessert werden, indem zwischen Kathode 18 und Anode 12 kein Konstantstrom sondern ein pulsierender Gleichstrom erzeugt wird. Die Pulsdauer des Gleichstroms beträgt dabei bevorzugt zwischen 20 und 500 Millisekunden, vorzugsweise jedoch zwischen 40 und 100 Millisekunden. Dabei entspricht die Länge der zwischen den einzelnen Strompulsen eingelegten Pausen in etwa der Dauer der Strompulse. Bei schwer abzutragenden Metallen kann jedoch auch eine Verlängerung der Strompulse im Vergleich zu den Pausen von Vorteil sein. Die Strompausen ermöglichen das Austragen der während der Strompulse abgetragenen metallischen Komponenten, vor allen Dingen dann, wenn es sich dabei um schwerlösliche Oxide handelt.

Um eine chemische Ätzung der Metalloberflächen zu vermeiden, wird der PH-Wert des Elektrolyten in einem schwach sauren bis schwach alkalischen Milieu gehalten. Um die elektrische Leitfähigkeit des Elektrolyten sicherzustellen, werden bevorzugt Neutralsalze wie Natriumnitrat, Natriumsulfat oder Kochsalz zugesetzt. Des weiteren können als Lösungsmittel anstelle von Wasser auch Wasser/Glykolmischungen oder reines Ethylenglykol verwendet werden. Die zugesetzten Elektrolyte werden entsprechend ihrem Löslichkeitsverhalten angepaßt, indem beispielsweise die entsprechenden Tetraalkylammoniumsalze eingesetzt werden. Darüber hinaus können Benetzungsmittel wie Tenside oder Komplexbildner für Metalle in geringen Mengen zugesetzt werden. Der Abtrag wird bevorzugt bei einer Temperatur von 20 bis 60° C durchgeführt.

Es ist vorteilhaft wenn der Elektrolyt unter Druck in die Kathode 18 eingepreßt wird. Dies erhöht dessen Strömungsgeschwindigkeit und verhindert die Bildung von Gasblasen beispielsweise durch den an der Kathode 18 entstehenden Wasserstoff. Der Elektrolyt wird beispielsweise außerhalb der ECM-Anlage mit bekannten Aufarbeitungsmethoden von den durch den Abtrag bedingten Metallschlämmen befreit und zurückgeführt.

Der Transport des Gegenstandes 14 durch die ECM-Vorrichtung wird bei dem in Figur 2 dargestellten Ausführungsbeispiel bevorzugt getaktet durchgeführt.

In Figur 3 ist schematisch dargestellt, dass sich eine Vorrichtung gemäß einem dritten Beispiel auch zur Strukturierung von gekrümmten bzw. gestuften Oberflächen eignet. Dabei wird die Kathode 18 entsprechend der gekrümmten Oberfläche 16 in ihrer Form angepaßt, gleiches gilt auch für die Maske 20.

In Figur 4 ist eine Vorrichtung gemäß einem Ausführungsbeispiel der vorliegender Erfindung dargestellt. Diese Vorrichtung weist zwei Kathoden 18, 18a auf, die auf entgegengesetzten Seiten 16, 17 des Gegenstandes 14 angeordnet sind. Dies ermöglicht die simultane Strukturierung der Oberflächen 16, 17. Um einen kontinuierlichen Transport des Gegenstandes 14, der beispielsweise als Bandmaterial ausgeführt sein kann, zu gewährleisten, ist die Anode 12 rollenförmig ausgeführt und kann in doppelter Ausführung 12, 12a vorgesehen sein. Des weiteren ist die Maske 20 als umlaufendes Band ausgeführt, das parallel zu der Bewegungsrichtung des Gegenstandes 14 an der Kathodenoberfläche der Kathode 18, 18a vorbeigeführt wird. Auch die Maske 20 ist in doppelter Ausführung 20, 20a vorgesehen.

Die der Erfindung zugrundeliegende Vorrichtung bzw. das erfindungsgemäße Verfahren kann beispielsweise zur Herstellung von Wärmeübertragern herangezogen werden. Eine Schnittdarstellung durch einen solchen Wärmeübertrager 30 ist in Abbildung 5 dargestellt. Der Wärmeübertrager 30 ist dabei aus mehreren Metallblechen 32a, 32b, 32c, 32d, 32e aufgebaut. Die Herstellung eines solchen Wärmeübertragers umfaßt allgemein die Strukturierung der Metallbleche 32a-32e unter Erzeugung von Kanalstrukturen 34 bzw. von Bohrungen zur Fixierung der Metallbleche, den Auftrag eines entsprechenden Lotes bevorzugt auf die mit den Kanalstrukturen 34 versehene Seite der Metallbleche sowie die Anordnung der einzelnen Metallbleche 32a-32e zu einem Stapel und deren Verlöten unter Bildung einer Schichtanordnung. Die Strukturierung der einzelnen Metallbleche 32a-32e erfolgt besonders vorteilhaft mit Hilfe der erfindungsgemäßen Vorrichtung. Dabei kann entweder, wie in Figur 5 dargestellt, jedes einzelne Metallblech 32a-32e einseitig mit Kanalstrukturen, 34 versehen werden oder, wie in Figur 6 dargestellt, einzelne Metallbleche 32b, 32d beidseitig strukturiert werden. In der Schichtanordnung werden dann jeweils ein strukturiertes Metallblech 32b, 32d und ein nicht strukturiertes Metallblech 32a, 32c, 32e abwechselnd übereinander angeordnet.

Eine dritte Variante ist in Figur 7 abgebildet, bei der die Kanalstrukturen 34 beidseitig strukturierter Metallbleche 32b, 32d zueinander versetzt zueinander aufgebracht werden. Dies erhöht die mechanische Stabilität und Festigkeit des resultierenden Wärmeübertragers.

Als Werkstoff für Wärmeübertrager ist insbesondere Aluminium oder eine Aluminiumlegierung, die beispielsweise noch Mangan enthalten kann geeignet, aber auch Kupfer kann verwendet werden. Als Lote werden bei aluminiumhaltigen Metallblechen siliciumhaltige Aluminiumlegierungen verwendet, bei kupferhaltigen Bronze.

Die Verwendung einer der Erfindung zugrundeliegenden Vorrichtung bzw. des erfindungsgemäßen Verfahrens ist jedoch nicht auf die Herstellung von Wärmeübertragern beschränkt, sondern sie eignet sich allgemein zur Strukturierung von metallischen Oberflächen. So können Strukturen größer als 100 nm zuverlässig bei wählbarer Tiefe erzeugt werden. Um Bohrungen wirkungsvoll in Metallblechen erzeugen zu können, kann es sinnvoll sein, in die ECM-Anlage zusätzlich eine stabförmige Kathode zu integrieren, die eine höhere Stromdichte aufweist als die Kathode 18.

Konkrete Anwendungsmöglichkeiten liegen beispielsweise in der Strukturierung dünner Metallbleche zur Erzeugung von Scherblättern für Haar- oder Bartpflegegeräte sowie in der Erzeugung von Leiterbahnen bei Leiterplatinen als Ersatz für chemische Ätzvorgänge. Auch die Erzeugung feinster Bohrungen wie beispielsweise von Düsenöffnungen bei Einspritzdüsen ist möglich.

## Patentansprüche

1. Vorrichtung zur Strukturierung einer Oberfläche (16, 17) eines elektrisch leitfähigen und als Anode geschalteten Gegenstandes (14) durch einen ECM-Prozess, mit:
einer Anode (12, 12a), welche in Kontakt mit dem Gegenstand (14) gebracht wird;
einer Kathode (18, 18a); und
einer in die Vorrichtung integrierten Maske (20, 20a), welche zwischen der Kathode (18, 18a) und der zu strukturierenden Oberfläche (16, 17) angeordnet ist, und welche Durchbrechungen (22) aufweist, deren Abmessungen weitgehend denen einer auf der Oberfläche (16, 17) zu erzeugenden Struktur (23) entsprechen;
**dadurch gekennzeichnet, dass**
die Maske (20, 20a) als um die Kathode (18, 18a) umlaufendes Band ausgeführt ist.

2. Vorrichtung nach Anspruch 1, **dadurch gekennzeichnet, dass** zwei oder mehr Kathoden (18, 18a) vorgesehen sind, die jeweils eine Maske (20, 20a) aufweisen.

3. Vorrichtung nach einem der Ansprüche 1 und 2, wobei die Kathode (18, 18a) mindestens eine Bohrung (26, 27) aufweist, welche für die Zuführung und/oder Abführung eines Elektrolyten in die Durchbrechungen (22) zwischen die Kathode (18, 18a) und die zu strukturierende Oberfläche (16, 17) ausgelegt ist.

4. Verfahren zur Strukturierung einer Oberfläche (16, 17) eines elektrisch leitfähigen Gegenstandes (14), mit den Schritten:
Kontaktieren des unmaskierten Gegenstandes (14) mit einer Anode (12, 12a) einer ECM-Anlage;
Kontinuierliches oder getaktetes vorbeiführen des unmaskierten Gegenstandes (14) an einer Kathodenoberfläche einer Kathode (18, 18a) der ECM-Anlage;
Vorbeiführen einer Maske (20, 20a), welche Durchbrechungen (22) aufweist, deren Abmessungen weitgehend denen einer auf der Oberfläche (16, 17) zu erzeugenden Struktur (23) entsprechen, zwischen der Kathodenoberfläche der Kathode (18, 18a) und der Oberfläche (16, 17) des Gegenstandes (14); und
Strukturieren der Oberfläche (16, 17) des Gegenstandes (14) durch einen ECM-Prozess zwischen Kathode (18, 18a) und Anode (12, 12a),
**dadurch gekennzeichnet, dass**
die Maske (20, 20a) ein um die Kathode (18, 18a) umlaufendes Band ist und in die ECM-Anlage integriert ist.

5. Verfahren nach Anspruch 4,
**dadurch gekennzeichnet, dass**
während der Strukturierung ein gepulster Gleichstrom zwischen Kathode (18, 18a) und Anode (12) fließt.

6. Verfahren nach einem der Ansprüche 4 und 5,
**dadurch gekennzeichnet, dass**
während des Strukturierens ein Elektrolyt in die Durchbrechungen (22) zwischen der Kathode (18, 18a) und der Oberfläche (16, 17) des Gegenstandes (14) eingebracht wird.

7. Verfahren nach Anspruch 6,
**dadurch gekennzeichnet, dass**
während des Strukturierens die Strömungsrichtung des Elektrolyten zeitweilig umgekehrt und/oder dessen Strömungsgeschwindigkeit variiert wird.

8. Verfahren nach einem der Ansprüche 4 bis 7,
**dadurch gekennzeichnet, dass**
die Maske (20, 20a) als flexible, umlaufende Blende ausgeführt ist.

9. Anwendung des Verfahrens nach einem der Ansprüche 4 bis 8 zu Herstellung von mit einer Kanalstruktur (34) versehenen Metallblechen (32a - 32e) eines Wärmeübertragers.

10. Anwendung des Verfahrens nach einem der Ansprüche 4 bis 8 zur Strukturierung eines Metallblechs zur Herstellung eines Scherblatts, insbesondere zur Haar- oder Bartpflege.

11. Anwendung des Verfahrens nach einem der Ansprüche 4 bis 8 zur Herstellung von Leiterbahnen einer Leiterplatine.

12. Anwendung des Verfahrens nach einem der Ansprüche 4 bis 8 zur Herstellung von Düsenöffnungen einer Düse, insbesondere einer Einspritzdüse.

## Claims

1. Device for structuring a surface (16, 17) of an electrically conductive object (14), connected as an anode, by means of an ECM process, comprising:
an anode (12, 12a), which is brought into contact with the object (14);
a cathode (18, 18a); and
a mask (20, 20a), which is integrated in the device, is arranged between the cathode (18, 18a) and the surface (16, 17) to be structured and has apertures (22) of dimensions that correspond largely to those of the structure (23) to be created on the surface (16, 17);
**characterized in that**
the mask (20, 20a) is configured as a strip running around the cathode (18, 18a).

2. Device according to Claim 1, **characterized in that** two or more cathodes (18, 18a) are provided, each having a mask (20, 20a).

3. Device according to either of Claims 1 and 2, the cathode (18, 18a) having at least one bore (26, 27), which is designed for feeding and/or removing an electrolyte into the apertures (22) between the cathode (18, 18a) and the surface (16, 17) to be structured.

4. Method for structuring a surface (16, 17) of an electrically conductive object (14), comprising the steps of:
bringing the unmasked object (14) into contact with an anode (12, 12a) of an ECM unit;
continuously or intermittently moving the unmasked object (14) past a cathode surface of a cathode (18, 18a) of the ECM unit;
moving a mask (20, 20a), which has apertures (22) of dimensions that correspond largely to those of a structure (23) to be created on the surface (16, 17) between the cathode surface of the cathode (18, 18a) and the surface (16, 17) of the object (14); and
structuring the surface (16, 17) of the object (14) by means of an ECM process between the cathode (18, 18a) and the anode (12, 12a),
**characterized in that**
the mask (20, 20a) is a strip running around the cathode (18, 18a) and is integrated in the ECM unit.

5. Method according to Claim 4, **characterized in that**, during the structuring, a pulsed direct current flows between the cathode (18, 18a) and the anode (12).

6. Method according to either of Claims 4 and 5, **characterized in that**, during the structuring, an electrolyte is introduced into the apertures (22) between the cathode (18, 18a) and the surface (16, 17) of the object (14).

7. Method according to Claim 6, **characterized in that**, during the structuring, the direction of flow of the electrolyte is reversed for a time and/or the flow rate thereof is varied.

8. Method according to one of Claims 4 to 7, **characterized in that** the mask (20, 20a) is configured as a flexible surround.

9. Use of the method according to one of Claims 4 to 8 for producing metal sheets (32a - 32e) of a heat exchanger that are provided with a channel structure (34).

10. Use of the method according to one of Claims 4 to 8 for the structuring of a metal sheet for producing a shearing blade, in particular for hair or beard trimming.

11. Use of the method according to one of Claims 4 to 8 for producing conductor tracks of a printed circuit board.

12. Use of the method according to one of Claims 4 to 8 for producing a nozzle opening of a nozzle, in particular of an injection nozzle.

## Revendications

1. Dispositif pour structurer à l'aide d'une opération ECM la surface (16, 17) d'un objet électriquement conducteur (14) raccordé en anode, le dispositif présentant :
une anode (12, 12a) amenée en contact avec l'objet (14),
une cathode (18, 18a) et
un masque (20, 20a), intégré dans le dispositif et disposé entre la cathode (18, 18a) et la surface (16, 17) à structurer et présentant des perforations (22) dont les dimensions correspondent largement à celles d'une structure (23) à former sur la surface (16, 17), **caractérisé en ce que**
le masque (20, 20a) est réalisé sous la forme d'une bande qui entoure la cathode (18, 18a).

2. Dispositif selon la revendication 1, **caractérisé en ce qu'**il présente deux ou plusieurs cathodes (18, 18a) qui présentent chacune un masque (20, 20a).

3. Dispositif selon l'une des revendications 1 et 2, dans lequel la cathode (18, 18a) présente au moins un alésage (26, 27) qui est conçu pour amener et/ou évacuer un électrolyte dans les perforations (22) entre la cathode (18, 18a) et la surface (16, 17) à structurer.

4. Procédé de structuration d'une surface (16, 17) d'un objet électriquement conducteur (14), le procédé présentant les étapes qui consistent à :
mettre l'objet (14) non masqué en contact avec une anode (12, 12a) d'une installation ECM,
faire passer de manière continue ou cadencée l'objet (14) non masqué devant la surface d'une cathode (18, 18a) de l'installation ECM,
faire passer un masque (20, 20a) qui présente des perforations (22) dont les dimensions correspondent largement à celles de la structure (23) à former sur la surface (16, 17) entre la surface de la cathode (18, 18a) et la surface (16, 17) de l'objet (14) et
structurer la surface (16, 17) de l'objet (14) par une opération ECM réalisée entre la cathode (18, 18a) et l'anode (12, 12a),
**caractérisé en ce que**
le masque (20, 20a) est une bande qui entoure la cathode (18, 18a) et qui est intégrée dans l'installation ECM.

5. Procédé selon la revendication 4, **caractérisé en ce qu'**un courant continu pulsé s'écoule entre la cathode (18, 18a) et l'anode (12) pendant la structuration.

6. Procédé selon l'une des revendications 4 et 5, **caractérisé en ce que** pendant la structuration, un électrolyte est apporté dans les perforations (22) entre la cathode (18, 18a) et la surface (16, 17) de l'objet (14).

7. Procédé selon la revendication 6, **caractérisé en ce que** pendant la structuration, la direction d'écoulement de l'électrolyte est inversée au cours du temps et/ou la vitesse d'écoulement est modifiée.

8. Procédé selon l'une des revendications 4 à 7, **caractérisé en ce que** le masque (20, 20a) est configuré comme tôle périphérique flexible.

9. Utilisation du procédé selon l'une des revendications 4 à 8 pour former des tôles métalliques (32a - 32e) dotées d'une structure (34) de canaux pour un transporteur de chaleur.

10. Utilisation du procédé selon l'une des revendications 4 à 8 pour structurer une tôle métallique destinée à réaliser une lame de rasoir, en particulier pour les soins des cheveux ou de la barbe.

11. Utilisation du procédé selon l'une des revendications 4 à 8 pour réaliser des pistes conductrices sur une carte de circuit.

12. Utilisation du procédé selon l'une des revendications 4 à 8 pour réaliser des ouvertures de tuyère pour une tuyère et en particulier une tuyère d'injection.
